# EUROPÄISCHE PATENTSCHRIFT

(11) **EP 2 154 452 B1**
(45) Veröffentlichungstag und Bekanntmachung des Hinweises auf die Patenterteilung: **06.04.2016**
(21) Anmeldenummer: 09166788.1
(22) Anmeldetag: 30.07.2009
(51) Int. Cl.: F25B 49/02, F25D 29/00

(54) **Kältegerät mit Zwangskühlung**
Cooling device with forced cooling
Appareil de refroidissement doté d'un refroidissement forcé

(30) Priorität: 07.08.2008 DE 102008041082
(43) Veröffentlichungstag der Anmeldung: 17.02.2010
(73) Patentinhaber: BSH Hausgeräte GmbH, 81739 München (DE)
(72) Erfinder: Roth, Michael, 89537 Giengen (DE); Wiedenmann, Matthias, 89189 Neenstetten (DE)

(56) Entgegenhaltungen:
- JP-A- H08 247 562
- JP-A- 2005 140 414

## Beschreibung

Die vorliegende Erfindung betrifft ein Kältegerät insbesondere Haushaltskältegerät, mit einem Verdichter und einem Verflüssiger, von denen wenigstens einer durch einen Lüfter zwangsgekühlt ist. Die Zwangskühlung ermöglicht im Vergleich zu einem Kältegerät mit passiver Kühlung eine kompaktere Bauform und eine bessere Platzausnutzung, doch tritt das Problem auf, dass im Falle einer Störung der Zwangskühlung die Wärmeableitung vom Verdichter und/oder vom Verflüssiger nicht ausreichend gewährleistet ist und die Gefahr der Überhitzung besteht. Wenn der Verdichter durch Überhitzung beschädigt wird, oder wenn seine Abwärme Kunststoffteile in seiner Umgebung zum Schmelzen bringt oder andere empfindliche Komponenten beschädigt, sind wesentlich aufwändigere und kostspieligere Reparaturen erforderlich, als wenn lediglich eine Störung der Zwangskühlung behoben werden muss.

Um diesem Problem zu begegnen, ist bekannt, im Maschinenraum eines solchen Kältegeräts einen Temperaturfühler vorzusehen, der der Abwärme des Verdichters ausgesetzt ist und dessen Ausgangssignal von einer Steuerschaltung berücksichtigt wird, um den Verdichter abzuschalten, wenn die Temperatur im Maschinenraum einen zulässigen Höchstwert übersteigt.

Diese Lösung ist nicht vollauf befriedigend, da der Temperatursensor auch dem Einfluss der Umgebungstemperatur ausgesetzt ist und die Möglichkeit besteht, dass die Erfassung einer unzulässig hohen Temperatur durch den Sensor nicht auf eine Störung, sondern auf eine hohe Umgebungstemperatur zurückzuführen ist. Die Wahrscheinlichkeit einer solchen Fehlerfassung ist nicht zuletzt dadurch erhöht, dass eine hohe Umgebungstemperatur auch zu langen Verdichterlaufzeiten und damit auch im störungsfreien Betrieb zu relativ hohen Temperaturen des Verdichters und des Verflüssigers führt.

Das Dokument JP 408247562 A offenbart ein Kältegerät mit einem durch einen Lüfter zwangsgekühlten Verdichter.

Aus JP 2005 140414 A ist ein Kältegerät bekannt, bei dem Verflüssiger durch zwei Lüfter zwangsgekühlt ist und im Falle, dass aufgrund einer Störung einer der Lüfter stehenbleibt, die Drehzahl des Verdichters begrenzt wird, um dessen Überhitzung zu vermeiden. Wenn bei diesem Kältegerät ein Lüfter ausfällt, kann das Gerät bis zur Reparatur des Lüfters dennoch weiterbetrieben werden, da der zweite Lüfter, ggf. mit erhöhter Leistung, den Verdampfer weiter kühlen kann. Bei einem Kältegerät mit einem einzigen Lüfter ist dies nicht möglich.

Aufgabe der vorliegenden Erfindung ist, ein Kältegerät mit Zwangskühlung anzugeben, bei dem ein Weiterbetrieb auch im Falle einer Störung eines nicht redundanten Lüfters möglich ist.

Die Aufgabe wird gelöst durch ein Kältegerät mit den Merkmalen des Anspruchs 1.

Gemäß einer bevorzugten Ausführungsform weist der Lüfter einen Signalausgang auf, an dem das für die Bewegung des Lüfterrades zumindest weitgehend repräsentative Signal als Ausgangssignal bereitgestellt ist.

Vorteilhafterweise wird der Verdichter anhand des Ausgangssignals des Lüfters geregelt.

Es kann vorgesehen werden, dass die Steuerschaltung den Verdichter ausschaltet, wenn das Ausgangssignal einen zweiten unzureichenden Bewegungszustand des Lüfterrades des Lüfters anzeigt

Die Leistungsreduzierung kann vorteilhafter Weise durch eine getaktete Ansteuerung des Lüfters erreicht werden.

Das Ausgangssignal kann zumindest dann oszillieren, wenn der Bewegungszustand des Gebläses ausreichend ist. Ein solches oszillierendes Ausgangssignal kann recht einfach, zum Beispiel auf induktivem Wege, von der Bewegung eines Motors des Gebläses abgeleitet werden. Die Frequenz eines solchen abgeleiteten Signals ist vorzugsweise zu einer Drehfrequenz des Gebläses proportional. Wenn das Ausgangssignal einen konstanten Wert annimmt, so zeigt dies einen vollständigen Stillstand des Gebläses an, der je nach Ausgestaltung zur vollständigen Abschaltung des Verdichters oder zu Verdichterbetrieb mit reduzierter Leistung führen kann. Unterschreitet die Frequenz des Ausgangssignals einen von Null verschiedenen vorgegebenen Grenzwert, so hat dies vorzugsweise den Verdichterbetrieb mit reduzierter Leistung zur Folge.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein erfindungsgemäßes Kältegerät;
- Fig. 2: ein Blockschaltbild von elektrischen Komponenten des Kältegeräts; und
- Fig. 3: ein Flussdiagramm eines in einem Mikroprozessor eines erfindungsgemäßen Kältegeräts ausgeführten Steuerverfahrens.

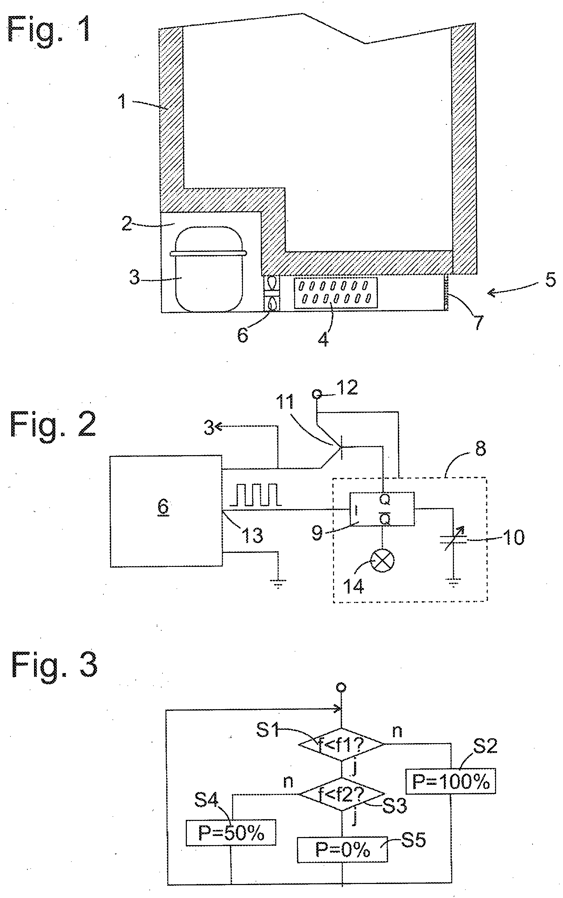

Fig. 1 zeigt einen stark schematisierten Schnitt durch den unteren Bereich des Gehäuses eines Haushalts-Kältegeräts. In dem Fachmann an sich vertrauter Weise ist in einer unteren rückwärtigen Ecke eines wärmeisolierenden Korpus 1 des Kältegeräts eine Maschinenraumnische 2 ausgespart, in der ein Verdichter 3 untergebracht ist. Der Verdichter 3 bildet zusammen mit einem Verflüssiger 4 und einem am Lagerraum des Kältegeräts angeordneten, in der Fig. nicht dargestellten Verdampfer einen Kältemittelkreislauf.

Der Verflüssiger 4 ist im hier gezeigten Fall in einem Sockel 5 des Kältegeräts, unterhalb des wärmeisolierenden Korpus 1, untergebracht. Ein elektrisch angetriebenes Gebläse 6 saugt im Betrieb Frischluft durch ein Lüftungsgitter 7 an der Vorderseite des Sockels 5 und durch den Verflüssiger 4 und bläst den Verdichter 3 an. Je nach Bauart des Geräts kann an Verflüssiger 4 und Verdichter 3 erwärmte Luft aus der Maschinenraumnische 2 hinter der Rückwand des Korpus 1 aufsteigen oder die Maschinenraumnische 2 über einen außerhalb der Schnittebene durch den Sockel 5 zur Vorderseite des Geräts hin verlaufenden Ausstoßkanal verlassen.

Ein Temperaturfühler ist auf dem Weg der am Verdichter 3 beziehungsweise Verflüssiger 4 erwärmten Luft an keiner Stelle vorgesehen. Statt dessen ist der Elektromotor des Gebläses 6 ausgelegt, um ein seinen Bewegungsstand anzeigendes Signal an einem Ausgangsanschluss 13 zu liefern. Wie in dem Blockdiagramm der Fig. 2 angedeutet, kann dieses Signal zum Beispiel ein oszillierendes Rechtecksignal sein, dessen Oszillationsfrequenz direkt proportional zur Drehgeschwindigkeit des Gebläses 6 ist, beispielsweise indem das rotierende Magnetfeld eines Elektromotors des Gebläses 6 über ein induktives Element oder über eine Hall-Sonde erfasst wird.

Eine mit dem für den Bewegungszustand des Gebläses 6 repräsentativen Ausgangssignal beaufschlagte Steuerschaltung 8 ist in dem hier betrachteten elementaren Fall im wesentlichen lediglich durch ein retriggerbares Monoflop 9 gebildet, dessen Verweilzeit in seinem instabilen Zustand durch externe Beschaltung, z.B. mit einem Kondensator 10, festlegbar ist.

Ein Ausgang Q des Monoflops steuert einen Schalter, hier einen Leistungstransistor 11, über den das Gebläse 6 und der Verdichter 3 mit Betriebsenergie von einer Klemme 12 versorgt werden. Solange die Periodendauer des Ausgangssignals vom Gebläse 6 kürzer ist als die Verweildauer des Monoflops 9 im instabilen Zustand, wird das Monoflop 9 vor seiner Rückkehr in den stabilen Zustand ständig neu getriggert und liefert somit ein konstantes Ausgangssignal an den Transistor 11, durch den dieser im leitfähigen Zustand gehalten wird. So werden Gebläse 6 und Verdichter 3 kontinuierlich mit Energie versorgt, solange eine Betriebsspannung an der Klemme 12 anliegt.

Wenn der Rotor des Gebläses 6 stecken bleibt, oszilliert sein Ausgangssignal nicht mehr, das Monoflop 9 wird nicht neu getriggert und die Energieversorgung von Gebläse 6 und Verdichter 3 wird unterbrochen. Eine Überhitzung des Verdichters 3, des Gebläses 6 oder von ihnen benachbarten hitzeempfindlichen Komponenten im Falle eines Gebläsestillstands ist somit ausgeschlossen.

Ein Warnsignalgeber wie etwa eine Signalleuchte 14 ist an einem invertierenden Signalausgang *Q̅* des Monoflop 9 angeschlossen, um immer dann ein Warnsignal zu liefern, wenn das Monoflop 9 die Energieversorgung des Verdichters 3 und des Gebläses 6 unterbricht.

Die Betriebsspannung an der Klemme 12 ist in an sich bekannter Weise über einen (nicht dargestellten) Thermostaten geregelt, das heißt es liegt eine nicht verschwindende Betriebsspannung an dem Transistor 11 und der Steuerschaltung 8 an, wenn und solange ein nicht dargestellter Temperatursensor im Innenraum des Kältegeräts Kühlbedarf erkennt; anderenfalls ist die Klemme 12 spannungslos. Durch das Einschalten dieser Betriebsspannung geht das Monoflop 9 zunächst in den instabilen Zustand über, so dass das Gebläse 6 anlaufen kann und beginnt, das intermittierende Ausgangssignal zu erzeugen, das bei ordnungsgemäßem Betrieb das Monoflop 9 im instabilen Zustand hält. Dieser Zustand bleibt bestehen, bis der Temperatursensor keinen Kühlbedarf mehr anzeigt und die Betriebsspannung an der Klemme 12 wieder abgeschaltet wird.

Obwohl über den Thermostaten die Versorgungsspannung der Signalleuchte 12 an sich abschaltbar ist, ist die Signalleuchte 12 im Störungsfall dennoch kontinuierlich im Betrieb, da im Falle eines Stillstands von Verdichter 3 und Gebläse 6 der Temperatursensor fortwährend Kühlbedarf erfasst und somit die Steuerschaltung 8 kontinuierlich mit Betriebsspannung versorgt ist.

Es ist auch ein Störungszustand denkbar, in dem das Gebläse 6 nicht von vornherein gestoppt ist, sondern lediglich so weit verlangsamt ist, dass das Monoflop 9 zeitweilig seinen stabilen Zustand erreicht. Da im stabilen Zustand das Gebläse 6 nicht mit Energie versorgt wird, führt eine solche Situation zu einer zusätzlichen Verlangsamung des Gebläses und wiederum zu einer Verlängerung der stabilen Perioden des Monoflops 9. Es kommt ein sebstverstärkender Prozess in Gang, an dessen Ende nach kurzer Zeit der vollständige Stillstand von Gebläse 6 und Verdichter 3 steht.

Falls der Versorgungsanschluss des Gebläses 6 nicht wie in Fig. 2 gezeigt durch den Transistor 11 geschaltet sondern direkt mit der Klemme 12 verbunden ist, ist ein Betrieb des Verdichters 3 auch mit Leistungen möglich, die zwischen Volllast und Ausschalten liegen. Wenn nämlich die Periode des Gebläseausgangssignals länger ist als die Verweildauer des Monoflops 9 im instabilen Zustand, dann wechseln sich wie im oben betrachteten Fall stabile und instabile Zustände des Monoflops 9 gegenseitig ab, und der Verdichter 3 wird mit einer entsprechend der Abfolge dieser Zustände getasteten Versorgungsspannung beaufschlagt. Da das Gebläse 6 jedoch kontinuierlich versorgt bleibt, kann ein Betriebszustand, in dem sich stabile und instabile Zustände des Monoflops 9 abwechseln, stationär sein und einen Verdichterbetrieb unterhalb der Volllast ermöglichen.

Die Steuerschaltung 8 der Fig. 2 kann auch in Form eines Mikroprozessor- oder Mikrocontrollersystems implementiert sein, wobei ein solches System zweckmäßigerweise auch andere Steuerungsaufgaben wie etwa die Thermostatregelung wahrnehmen kann. Um die Leistung des Verdichters 3 zu regeln, vergleicht das Mikroprozessorsystem in einem Schritt S1 zunächst die Frequenz f des Gebläseausgangssignals mit einer ersten Grenzfrequenz f₁. Wenn diese erste Grenzfrequenz f₁ überschritten ist, arbeitet das System korrekt, und der Verdichter 3 wird in Schritt S2 mit 100% seiner Nennleistung versorgt. Im Falle einer Signalfrequenz f unter dem ersten Grenzwert f₁ läuft das Gebläse 6 zu langsam, und es folgt ein Schritt S3 des Vergleichs mit einem zweiten, niedrigeren Grenzwert f₂.

Wenn dieser nicht unterschritten ist, ist das Gebläse 6 zumindest noch so weit funktionsfähig, dass es eine Notkühlung des Verdichters 3 und des Verflüssigers 4 gewährleisten kann. In diesem Fall wird der Verdichter 3 mit reduzierter Leistung, zum Beispiel 50% seiner Nennleistung, durch Tasten seiner Versorgungsspannung betrieben. Ein Fehlersignal wird erzeugt, um einen Benutzer zur Behebung der Störung zu veranlassen, aber das System ist noch so weit intakt, dass eine Kühlung des Innenraums, wenn auch mit verlängerten Betriebsphasen des Verdichters 3, gewährleistet werden kann.

Ist jedoch auch der zweite Grenzwert f₂ unterschritten, so dass auch ein Notbetrieb nicht ohne das Risiko einer Überhitzung des Verdichters 3 oder benachbarter Komponenten aufrecht erhalten werden kann, dann wird der Verdichter 3 in Schritt S5 komplett ausgeschaltet.

In Fig. 3 ist das Verfahren in Form einer Endlos-Schleife dargestellt, die auch nach einer Entscheidung, die Leistung des Verdichters 3 zu reduzieren oder ihn komplett auszuschalten, zum Ausgangspunkt zurückkehrt und die Beurteilung der Gebläseausgangssignalfrequenz f wiederholt. So kann das Mikroprozessorsystem im Falle einer vorübergehenden Blockade des Gebläses 6 unmittelbar zum Normalbetrieb zurückkehren, wenn die Gründe für die Blockade beseitigt sind und das Gebläse 6 wieder läuft. Denkbar ist natürlich auch eine Ausgestaltung des Verfahrens, bei der das Verfahren jeweils mit Schritt S4 oder Schritt S5 abbricht und ein Neustart nur durch einen äußeren Eingriff in das Mikroprozessorsystem wie etwas einen Reset erreichbar ist.

Die Anzahl der betrachteten Grenzwerte der Gebläseausgangsfrequenz ist willkürlich; es kann auch nur ein einziger Grenzwert oder eine größere Zahl von Grenzwerten berücksichtigt werden. Im Extremfall kann die Verdichterleistung P auch als eine kontinuierliche Funktion der Gebläseausgangssignalfrequenz f definiert sein.

## Patentansprüche

1. Kältegerät insbesondere Haushaltskältegerät, mit einem Verdichter (3) und einem Verflüssiger (4), von denen wenigstens einer durch einen Lüfter (6) mit einem Lüfterrad zwangsgekühlt ist, wobei ein für den Bewegungszustand des Lüfterrades des Lüfters (6) repräsentatives Signal einer Steuerschaltung (8) zugeführt ist, um den Verdichter (3) mit reduzierter Leistung zu betreiben, wenn das Ausgangssignal einen ersten unzureichenden Bewegungszustand des Lüfterrades des Lüfters (6) anzeigt, **dadurch gekennzeichnet, dass** das Ausgangssignal zumindest dann oszilliert, wenn der Bewegungszustand des Lüfterrades des Lüfters (6) ausreichend ist und dass die Oszillationsfrequenz des Ausgangssignals repräsentativ für die Drehfrequenz des Lüfterrades des Lüfters (6) ist.

2. Kältegerät nach Anspruch 1, **dadurch gekennzeichnet, dass** das Signal als Ausgangssignal eines Signalausgangs (13) des Lüfters (6) bereitgestellt ist.

3. Kältegerät nach Anspruch 1 oder 2, **dadurch gekennzeichnet, dass** die Steuerschaltung (8) den Betrieb des Verdichters (3) regelt.

4. Kältegerät nach einem der Ansprüche 1 bis 3, **dadurch gekennzeichnet, dass** die Steuerschaltung (8) eingerichtet ist, den Verdichter (3) auszuschalten, wenn das Ausgangssignal einen zweiten unzureichenden Bewegungszustand des Lüfterrades des Lüfters (6) anzeigt.

5. Kältegerät nach einem der vorhergehenden Ansprüche, **dadurch gekennzeichnet, dass** das Ausgangssignal in einem unzureichenden Bewegungszustand des Lüfterrades des Lüfters (6) einen festen Pegel annimmt.

## Claims

1. Cooling device, in particular household cooling device, having a compressor (3) and a condenser (4), at least one of which is force-cooled by a fan (6) with a fan impeller, wherein a signal which is representative of the state of motion of the fan impeller of the fan (6) is passed to a control circuit (8), in order to operate the compressor (3) with reduced power when the output signal displays a first inadequate state of motion of the fan impeller of the fan (6), **characterised in that** the output signal oscillates at least whenever the state of motion of the fan impeller of the fan (6) is adequate and that the oscillation frequency of the output signal is representative of the rotational frequency of the fan impeller of the fan (6).

2. Cooling device according to claim 1, **characterised in that** the signal is provided as an output signal of a signal output (13) of the fan (6).

3. Cooling device according to claim 1 or 2, **characterised in that** the control circuit (8) regulates the operation of the compressor (3).

4. Cooling device according to one of claims 1 to 3, **characterised in that** the control circuit (8) is designed to deactivate the compressor (3) when the output signal displays a second inadequate state of motion of the fan impeller of the fan (6).

5. Cooling device according to one of the preceding claims, **characterised in that** the output signal assumes a fixed level in an inadequate state of motion of the fan impeller of the fan (6).

## Revendications

1. Appareil frigorifique, notamment appareil frigorifique à usage domestique, comprenant un compresseur (3) et un condenseur (4), dont au moins un est refroidi de manière forcée au moyen d'un ventilateur (6) muni d'une roue de ventilateur, un signal représentatif pour l'état de déplacement de la roue du ventilateur (6) étant amené à un circuit de commande (8) afin de faire fonctionner le compresseur (3) avec une puissance réduite lorsque le signal de sortie indique un premier état de déplacement insuffisant de la roue du ventilateur (6), **caractérisé en ce que** le signal de sortie oscille au moins lorsque l'état de déplacement de la roue du ventilateur (6) est suffisant, et **en ce que** la fréquence d'oscillation du signal de sortie est représentative pour la fréquence de rotation de la roue du ventilateur (6).

2. Appareil frigorifique selon la revendication 1, **caractérisé en ce que** le signal est fourni comme signal de sortie d'une sortie de signal (13) du ventilateur (6).

3. Appareil frigorifique selon la revendication 1 ou 2, **caractérisé en ce que** le circuit de commande (8) règle le fonctionnement du compresseur (3).

4. Appareil frigorifique selon l'une quelconque des revendications 1 à 3, **caractérisé en ce que** le circuit de commande (8) est agencé pour mettre le compresseur (3) hors circuit lorsque le signal de sortie indique un deuxième état de déplacement insuffisant de la roue du ventilateur (6).

5. Appareil frigorifique selon l'une quelconque des revendications précédentes, **caractérisé en ce que** le signal de sortie, dans un état de déplacement insuffisant de la roue du ventilateur (6), prend un niveau fixe.
